# EUROPEAN PATENT SPECIFICATION

(11) **EP 4 303 590 B1**
(45) Date of publication and mention of the grant of the patent: **03.06.2026**
(21) Application number: 22762975.5
(22) Date of filing: 16.02.2022
(51) Int. Cl.: G01N 35/02, G01N 35/10, G01N 35/00

(54) **AUTOMATED ANALYSIS DEVICE, AND SAMPLE DISPENSING METHOD**
AUTOMATISIERTE ANALYSEVORRICHTUNG UND PROBENAUSGABEVERFAHREN
DISPOSITIF D'ANALYSE AUTOMATISÉE, ET PROCÉDÉ DE DISTRIBUTION D'ÉCHANTILLON

(30) Priority: 04.03.2021 JP 2021034458
(43) Date of publication of application: 10.01.2024
(73) Proprietor: HITACHI HIGH-TECH CORPORATION, Tokyo 105-6409 (JP)
(72) Inventor: TAMEZANE, Hideto, Tokyo 105-6409 (JP); YAMAZAKI, Isao, Tokyo 105-6409 (JP)
(74) Representative: Strehl & Partner mbB
(86) International application number: PCT/JP2022/006178
(87) International publication number: WO 2022/185919

(56) References cited:
- WO-A1-2015/108164
- WO-A1-2016/139997
- JP-A- 2012 037 236
- JP-A- 2017 207 298
- JP-A- 2019 143 990
- US-A1- 2015 219 680
- US-A1- 2020 372 287

## Description

### Technical Field

The present invention relates to an automatic analyzer and a sample dispensing method for qualitatively or quantitatively analyzing a biological sample (hereinafter referred to as a sample) such as blood or urine.

### Background Art

As an example of a sample dispensing device capable of detecting a dispensing abnormality occurring at a time of sample dispensing regardless of a type or a degree, PTL 1 discloses that a pressure sensor is connected to a dispensing flow path system including a sample probe and a dispensing syringe, a plurality of output values of the pressure sensor at a time of a dispensing operation of a sample are taken, a multi-item analysis (Mahalanobis distance) in which the obtained plurality of output values of the pressure sensor are set as items is performed, and whether dispensing is normally performed is determined by comparison with a threshold.

### Citation List

### Patent Literature

PTL 1: JP2008-224691A

An automatic analyzer with the features in the precharacterizing portion of Claim 1 is disclosed in US 2025/219 680 A1.

### Summary of Invention

### Technical Problem

An automatic analyzer performs qualitative and quantitative analysis by adding and reacting a reagent that specifically reacts with a specific component contained in a sample and measuring absorbance and an amount of luminescence of a reaction solution.

In such an automatic analyzer, it is desired to react a minimum necessary amount of the sample with the reagent, and a step of dispensing the sample, which is an analysis target, and the reagent to be added to and reacted with the sample into a reaction container is necessary.

Since amounts of the sample and the reagent dispensed into the reaction container are small, an influence of dispensing accuracy on analysis accuracy is inevitably large. Accordingly, it is important to reliably detect a dispensing abnormality leading to a decrease in the dispensing accuracy.

Examples of a reason for the abnormality in dispensing the sample include clogging of a nozzle due to aspiration of a solid foreign matter such as fibrin. When the clogging occurs in the nozzle, a predetermined amount of the sample cannot be dispensed into the reaction container, and a reliable analysis result cannot be obtained.

As a technique for detecting such an abnormality at the time of dispensing, a technique is proposed in which the pressure sensor is provided in a dispensing flow path including a dispensing nozzle and an abnormality of the nozzle is checked based on a pressure fluctuation (see PTL 1).

In the automatic analyzer disclosed in PTL 1, criteria data corresponding to a dispensing amount is prepared and abnormality determination processing is performed. However, the inventors of the invention have found that there is room for performing the abnormality determination more appropriately by using the criteria data corresponding to a type of a sample container in which the sample is accommodated and a liquid amount.

Specifically, in sample dispensing from a sample container for minute amount that is used to reduce a minimum amount of sample required for performing analysis (hereinafter, referred to as a dead volume amount), a nozzle tip may come into contact with a container bottom in the middle of aspiration due to an additional lowering operation of the nozzle for preventing blank aspiration due to lowering of a liquid surface.

Due to the contact, a pressure fluctuation in a flow path may be observed in the middle of the aspiration, and the pressure fluctuation may be detected as a pressure abnormality. It is clear from a study of the present inventors that the pressure fluctuation does not affect an analysis result (aspiration amount), and it is not necessary nor appropriate to detect the pressure fluctuation as an abnormality. The detection of the pressure fluctuation as an abnormality leads to disposal of the sample or the like as an analysis abnormality, leading to an increase in the dead volume amount as a result, and thus it is desired to avoid detecting the pressure fluctuation as an abnormality.

The invention has been made in view of the technical problem described above, and an object thereof is to provide an automatic analyzer and a sample dispensing method capable of reducing a dead volume amount while maintaining monitoring of a dispensing process.

### Solution to Problem

For solving the above problems, the present invention provides the automatic analyzer for analyzing samples and the dispensing method for samples by an automatic analyzer defined in the independent claims. Further advantageous features are set out in the dependent claims.

### Advantageous Effects of Invention

According to the invention, a dead volume amount can be reduced while maintaining monitoring of a dispensing process. Problems, configurations, and effects other than those described above will be clarified with the following description of examples.

### Brief Description of Drawings

FIG. 1 is a view showing a schematic configuration of an automatic analyzer according to an embodiment 1 of this invention.
FIG. 2 is an enlarged view of a sample dispensing mechanism in the automatic analyzer according to the embodiment 1.
FIG. 3 is a view for explaining the type of sample containers.
FIG. 4 is a functional block diagram showing the details of a control section in the automatic analyzer according to the embodiment 1.
FIG. 5 is a flow chart about a series of processing by the control section in the automatic analyzer according to the embodiment 1.
FIG. 6 is a functional block diagram showing the details of a control section in an automatic analyzer according to an embodiment 2 of this invention.
FIG. 7 is a flow chart about a series of processing by the control section in the automatic analyzer according to the embodiment 2.
FIG. 8 is a functional block diagram showing the details of a control section in an automatic analyzer according to an embodiment 3 of this invention.
FIG. 9 is a flow chart about a series of processing by the control section in the automatic analyzer according to the embodiment 3.

### Description of Embodiments

Hereinafter, examples of an automatic analyzer and a sample dispensing method according to the invention will be described with reference to the drawings. In the drawings used in the present specification, the same or corresponding components are denoted by the same or similar reference numerals, and repeated description of these components may be omitted.

In the following examples, it is needless to say that components (including element steps and the like) are not necessarily essential unless otherwise particularly specified, clearly considered as essential in principle, and the like.

### <Embodiment 1>

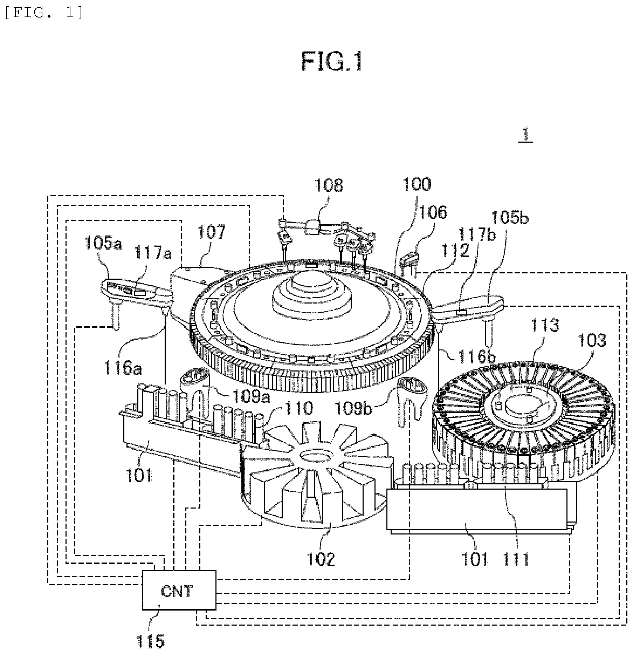

An automatic analyzer and a sample dispensing method according to Embodiment 1 of the invention will be described with reference to FIGS. 1 to 5.

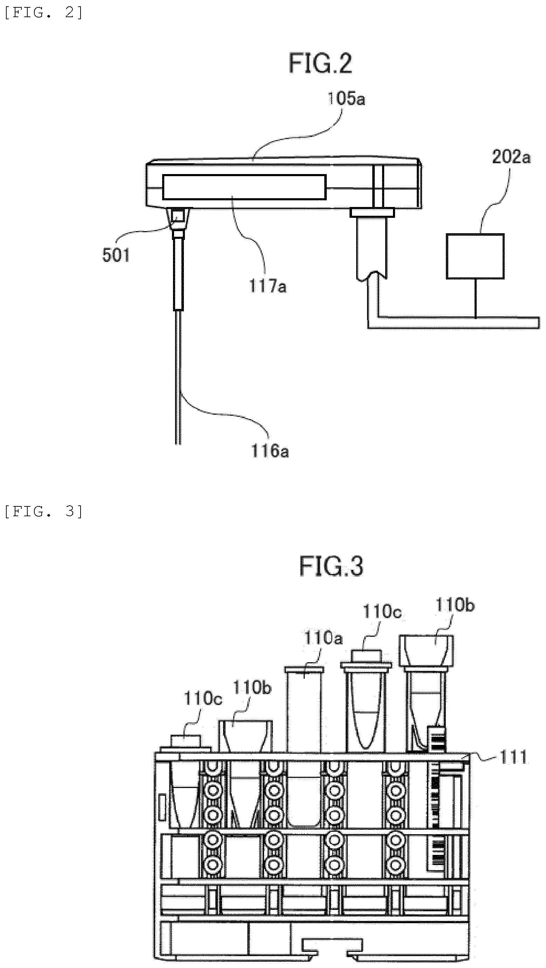

First, a configuration of the automatic analyzer according to the present embodiment will be described with reference to FIGS. 1 and 2. FIG. 1 is a diagram showing an overall schematic configuration of the automatic analyzer according to Embodiment 1 of the invention. FIG. 2 is an enlarged view of a sample dispensing mechanism.

An automatic analyzer 1 shown in FIG. 1 is a device that automatically analyzes a sample, and includes transfer lines 101, a rack rotor 102, a reagent disk 103, a reaction disk 100, a sample dispensing mechanism 105a, a reagent dispensing mechanism 105b, a stirring mechanism 106, a spectroscope 107, a cleaning mechanism 108, nozzle cleaning mechanisms 109a and 109b, capacitance detecting mechanisms 117a and 117b, a pressure sensor 202a (see FIG. 2), and a control device 115.

The rack rotor 102 is a machine for setting a sample container 110 holding a sample in a device, and holds a plurality of sample racks 111 on which a plurality of the sample containers 110 transported by the transfer line 101 are placed. The rack rotor 102 can be of a disk type, and can hold a plurality of sample holders each holding one sample container 110. Further, a form can be used in which the rack rotor 102 is omitted and the sample is directly dispensed from the sample container 110 on the transfer line 101.

The reaction disk 100 stores a plurality of reaction containers 112 for reacting a sample such as blood or urine with a reagent in a state of being separated from one another at predetermined intervals along a circumferential direction thereof. The reaction disk 100 has a structure in which the reaction container 112 and a reaction solution therein are maintained at a constant temperature.

The reagent disk 103 is a storage chamber in which a plurality of reagent bottles 113 each containing a reagent corresponding to a measurement item can be stored in a circumferential shape. The reagent disk 103 is kept cold.

The sample dispensing mechanism 105a is provided between the reaction disk 100 and the rack rotor 102. As shown in FIG. 2, a sample dispensing nozzle 116a is provided at a tip of the sample dispensing mechanism 105a, and system water filling the sample dispensing nozzle 116a is moved to cause the sample dispensing nozzle 116a to aspirate and discharge the sample through divided air.

The sample dispensing mechanism 105a includes a syringe (not shown) for moving the system water, and the movement of the system water is performed by driving the syringe. Further, a driving mechanism (not shown) such as a motor for performing vertical driving and rotational driving on the sample dispensing nozzle 116a is also provided.

The sample dispensing nozzle 116a moves while drawing an arc around a rotation axis of the sample dispensing mechanism 105a, and performs various dispensing operations of aspirating the sample for measurement from the sample container 110 or the reaction container 112 and discharging the sample to the reaction container 112.

The reagent dispensing mechanism 105b is provided between the reaction disk 100 and the reagent disk 103, a reagent dispensing nozzle 116b is provided at a tip of the reagent dispensing mechanism 105b, and the system water filling the reagent dispensing nozzle 116b is moved to cause the reagent dispensing nozzle 116b to aspirate and discharge the reagent through the divided air.

The reagent dispensing mechanism 105b includes a syringe (not shown) for moving the system water, and the movement of the system water is performed by driving the syringe. Further, a driving mechanism (not shown) such as a motor for performing vertical driving and rotational driving on the reagent dispensing nozzle 116b is also provided.

The reagent dispensing nozzle 116b moves while drawing an arc around a rotation axis of the reagent dispensing mechanism 105b, and performs various dispensing operations of aspirating the reagent from the reagent bottle 113 and discharging the reagent to the reaction container 112.

The capacitance detecting mechanism 117a is provided in the sample dispensing mechanism 105a, and is a device that detects a liquid surface of the reagent by detecting a capacitance value of the sample dispensing nozzle 116a. A circuit for converting a capacitance of the sample dispensing nozzle 116a into a voltage is provided, and a conversion voltage increases as the capacitance increases.

The capacitance detecting mechanism 117b is a device that detects a liquid surface height of the sample by detecting a capacitance value of the reagent dispensing nozzle 116b, and details thereof are the same as those of the capacitance detecting mechanism 117a.

Each of the capacitance detecting mechanisms 117a and 117b memorizes a threshold, and issues a liquid surface detection signal when the capacitance exceeds the threshold. The threshold is set to a voltage obtained by adding a constant value to the capacitance when the sample dispensing nozzle 116a or the reagent dispensing nozzle 116b is located in air. For example, a position sensor is disposed at an uppermost point in a height direction of the sample dispensing nozzle 116a or the reagent dispensing nozzle 116b, and a constant voltage is added to the conversion voltage of the capacitance at a timing when the uppermost point position sensor is deviated by a lowering operation to perform sample- and-hold, thereby setting the threshold.

In the invention, a capacitance value of a nozzle is a capacitance value between each dispensing nozzle and a housing (GND) constituting a base of the automatic analyzer 1.

As shown in FIG. 2, the pressure sensor 202a is connected to a pipe connected to the sample dispensing nozzle 116a, is provided to continuously detect pressure in the sample dispensing nozzle 116a to observe a change in the pressure, checks an aspiration state such as clogging or blank aspiration in the sample dispensing nozzle 116a, and monitors a pipe abnormality.

The stirring mechanism 106 is a device for stirring to stabilize a reaction between the sample and the added reagent dispensed into the reaction container 112, and includes, for example, stirring blades or spatula-shaped bars (not shown) provided at a tip thereof. The stirring mechanism 106 is not limited to such a mechanism, and can be implemented by ultrasonic waves.

The spectroscope 107 is a device for performing a comparative color analysis on the reaction solution obtained by reacting the sample and the reagent in the reaction container 112, and is disposed to face a light source (not shown) disposed inside the reaction disk 100 to sandwich the reaction container 112.

The cleaning mechanism 108 is a device that aspirates the reaction solution after the analysis and cleans the reaction container 112.

The nozzle cleaning mechanism 109a for cleaning the sample dispensing nozzle 116a of the sample dispensing mechanism 105a is provided between the reaction disk 100 and the rack rotor 102. In addition, a nozzle cleaning mechanism 109b for cleaning the reagent dispensing nozzle 116b of the reagent dispensing mechanism 105b is provided between the reaction disk 100 and the reagent disk 103. Further, a cleaning mechanism (not shown) for cleaning the stirring mechanism 106 is provided between the reaction disk 100 and the stirring mechanism 106 to prevent contamination.

The control device 115 is connected to each device in the automatic analyzer 1 described above in a wired or wireless manner, and controls an operation of each device in the automatic analyzer 1. The control device 115 is a computer including a CPU, a memory, and the like, and performs calculation processing of obtaining a concentration of a predetermined component in the sample from a detection result of the spectroscope 107.

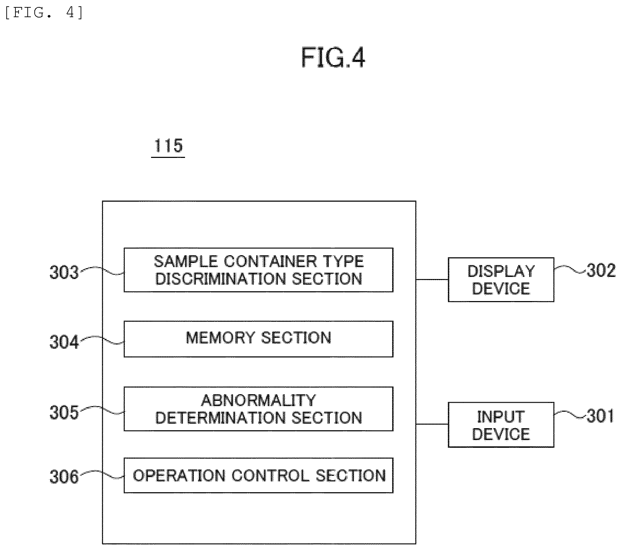

The control of the operation of each device by the control device 115 is executed based on various programs recorded in a memory device (not shown). In addition to various programs used for the measurement of the sample, the memory device memorizes various parameters input via an input device 301 (see FIG. 4), information on a measurement target sample (sample type information, and the like), a measurement result, and the like.

Operation control processing executed by the control device 115 may be integrated into one program, may be divided into a plurality of programs, or may be a combination thereof. Further, a part or all of the programs may be implemented by dedicated hardware, or may be modularized.

The above is an overall configuration of the automatic analyzer 1.

The configuration of the automatic analyzer is not limited to a case of a biochemical analyzer that analyzes biochemical analysis items as shown in FIG. 1, and can be an analyzer that analyzes other analysis items, such as an immune analyzer that analyzes immune analysis items. Further, a form of the biochemical analyzer is not limited to that shown in FIG. 1, and an analysis device that measures other analysis items, for example, an electrolyte, can be separately mounted.

The automatic analyzer is not limited to a form including a single analysis module configuration as shown in FIG. 1, and may have a configuration in which two or more analysis modules capable of measuring various identical or different analysis items or pretreatment modules for performing pretreatment are connected by a transfer device.

Analysis processing on the sample performed by the automatic analyzer 1 as described above is generally executed according to the following procedure.

First, the sample container 110 containing the sample to be analyzed is provided on the rack rotor 102, and is rotated and moved to a sample dividing position.

The sample dispensing mechanism 105a discharges the aspirated sample to the reaction container 112 on the reaction disk 100. The reagent aspirated by the reagent dispensing mechanism 105b from the reagent bottle 113 on the reagent disk 103 is further added to the reaction container 112, and the sample and the reagent in the reaction container 112 are mixed and stirred by the stirring mechanism 106.

Thereafter, an optical characteristic of light emitted from the light source and passing through the reaction solution held in the reaction container 112 is measured by the spectroscope 107, and a measurement result is transmitted to the control device 115.

The control device 115 obtains the concentration of the specific component in the sample by the calculation processing based on the transmitted measurement result. A user is notified of an analysis result via a display device 302 (see FIG. 4) and the analysis result is recorded in the memory device.

Next, types of sample containers in the present embodiment will be described with reference to FIG. 3. FIG. 3 is a view showing types of the sample container 110 in the automatic analyzer.

In the automatic analyzer 1, the sample containers 110 having various shapes are used, and examples of the types thereof include, for example, as shown in FIG. 3, in the sample rack 111 capable of mounting five sample containers 110, a test tube 110a mounted in the middle, a standard cup 110b provided on a rightmost side in FIG. 3 or on a left side of the test tube 110a, and a cup for minute amount 110c (sample container for minute amount, container for minute amount) provided on a leftmost side in FIG. 3 or on a right side of the test tube 110a.

In the standard cup 110b, a dead volume that cannot be used for the analysis is, for example, about 100 µl, whereas in the cup for minute amount 110c having a diameter smaller than that of the standard cup 110b, a dead volume is about 50 µl, which means the cup for minute amount 110c has a shape suitable for dispensing a further minute amount of sample.

The test tube 110a, the standard cup 110b, and the cup for minute amount 110c also have various shapes, and FIG. 3 is an example.

Next, functions of the control device 115 in the automatic analyzer 1 according to the present embodiment will be described in detail with reference to FIG. 4. FIG. 4 is a functional block diagram showing details of the functions of the control device 115.

As shown in FIG. 4, the control device 115 includes, in addition to the input device 301 and the display device 302, various functional blocks such as a sample container type discrimination section 303, a memory section 304, an abnormality determination section 305, and an operation control section 306 that controls operations of various mechanisms.

The sample container type discrimination section 303 obtains information on the sample container 110 and discriminates a type of the sample container 110 containing the sample. The discrimination of the container type is preferably performed based on the information on the sample container 110 input from a user interface including the input device 301 provided in the control device 115 or image information obtained by capturing an image of the sample container 110 to be determined by a camera from a side or from above, and is not limited to these methods.

The information on the sample container 110 input from the user interface is, for example, information indicating whether the container is the cup for minute amount 110c or another container (the test tube 110a or the standard cup 110b). In addition, in processing based on the image captured by the camera, the image information is information obtained by performing image processing on the captured image and discriminating whether the container is the cup for minute amount 110c or another container (the test tube 110a or the standard cup 110b).

The discrimination is not limited to a case of discriminating whether the container is the cup for minute amount 110c or another container (the test tube 110a or the standard cup 110b), and may be a discrimination on whether the container is the test tube 110a or another container (the standard cup 110b or the cup for minute amount 110c ), and further a distinction for each type of the shape of the test tube 110a having various shapes, a distinction for each type of a shape of the standard cup 110b, a distinction for each type of a shape of the cup for minute amount 110c, and the like.

The memory section 304 memorize a plurality piece of determination criteria data used for determining whether there is an abnormality in the dispensing of the sample by the sample dispensing nozzle 116a of the sample dispensing mechanism 105a for each type of the sample container 110. For example, in a case of the cup for minute amount 110c, the determination criteria data includes pressure data before the sample dispensing nozzle 116a comes into contact with a bottom of the cup for minute amount 110c. Further, the determination criteria data may include a pressure fluctuation caused by a light contact of the sample dispensing nozzle 116a with the bottom of the cup for minute amount 110c, assuming that there is a light contact.

The abnormality determination section 305 determines whether there is an abnormality in the dispensing of the sample by the sample dispensing nozzle 116a based on a detection result of the pressure sensor 202a when the sample to be dispensed used for the analysis is dispensed by the sample dispensing mechanism 105a, and the determination criteria data which is stored in the memory section 304 and corresponds to the type of the sample container 110 discriminated by the sample container type discrimination section 303.

Whether there is an abnormality in the dispensing of the sample can be determined by calculating statistical distances such as a Mahalanobis distance, a Euclidean distance, a standard Euclidean distance, a Manhattan distance, a Chebyshev distance, a Minkowski distance, and a multivariate normal density. A known technique can be used for the determination, and the determination is not limited thereto.

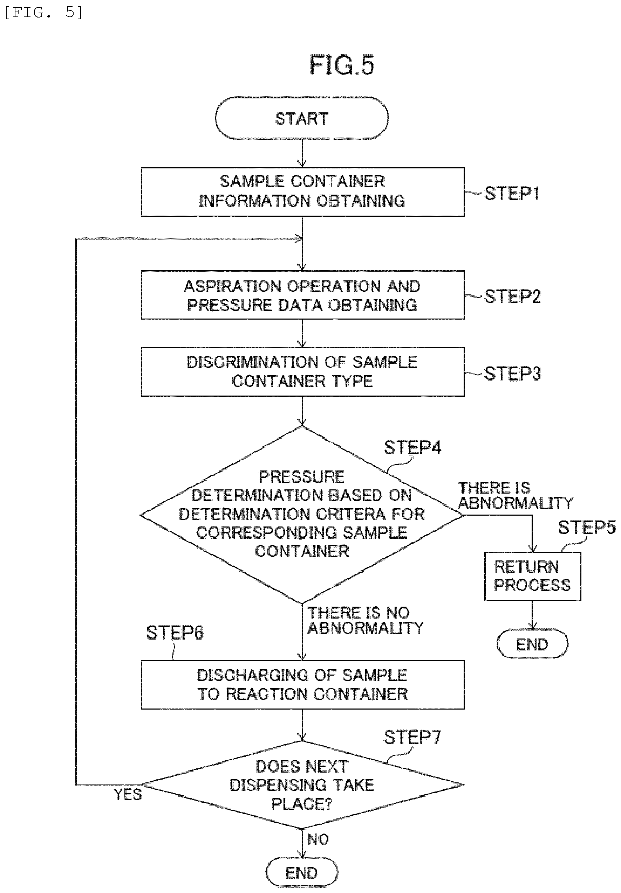

Next, the sample dispensing method according to the present embodiment which is preferably executed in the above-described automatic analyzer 1 will be described with reference to FIG. 5. FIG. 5 is a flowchart for a series of processing of a control section in the automatic analyzer according to the present embodiment, and a control entity of an operation is preferably the control device 115.

First, when an analysis start is instructed from the input device 301 by an operation of the user, the control device 115 obtains the information on the sample container 110 to be dispensed by the sample container type discrimination section 303 (step S1). Step S1 corresponds to an obtaining step of obtaining the information on the sample container 110.

Next, the control device 115 causes the operation control section 306 to perform a sample aspiration operation, and obtains pressure data of the pressure sensor 202a at that time (step S2). Step S2 corresponds to a dispensing step of dispensing the sample to be dispensed into the sample dispensing mechanism 105a.

Next, the sample container type discrimination section 303 of the control device 115 discriminates the type of the sample container 110 based on the information on the sample container 110 obtained in step S1 (step S3).

Next, the abnormality determination section 305 of the control device 115 determines whether there is an abnormality in the dispensing of the sample by the sample dispensing nozzle 116a based on the pressure data obtained in step S2 and the determination criteria data which is stored in the memory section 304 and corresponds to the sample container type discriminated by the sample container type discrimination section 303 (step S4). Step S4 corresponds to a determination step of determining whether there is an abnormality in the dispensing of the sample in the dispensing step based on the detection result from the pressure sensor 202a in the dispensing step and the type of the sample container 110 obtained in the obtaining step.

When a determination result in step S4 is that there is an abnormality, the processing proceeds to step S5, return processing is performed (step S5), and the processing ends.

Here, the return processing is processing in which the abnormality determination section 305 issues information indicating that there is an aspiration abnormality, and the control device 115 performs alarm processing and an operation of proceeding to processing on a next sample.

On the other hand, when the determination result in step S4 is that there is no abnormality, the processing proceeds to step S6, and the operation control section 306 causes the sample to be discharged into the reaction container 112 (step S6), and determines whether there is a next dispensing (step S7). When a determination result in step S7 is YES, that is, when there is the next dispensing, the processing returns to step S2. On the other hand, when the determination result is NO, that is, when there is no sample with an analysis request and next dispensing processing is not scheduled, the processing ends.

Next, effects of the present embodiment will be described.

The automatic analyzer 1 according to Embodiment 1 of the invention described above includes the sample dispensing mechanism 105a including the sample dispensing nozzle 116a for dispensing the sample from the sample container 110, the sample container type discrimination section 303 that obtains the information on the sample container 110 and discriminates the type of the sample container 110, the pressure sensor 202a that detects the pressure in the sample dispensing nozzle 116a, the memory section 304 that memorizes the plurality of pieces of determination criteria data used for determining presence or absence of the abnormality in the sample dispensing mechanism 105a for each type of the sample container 110, and the abnormality determination section 305 that determines whether there is an abnormality in dispensing the sample based on the detection result of the pressure sensor 202a when the sample is dispensed by the sample dispensing mechanism 105a and the determination criteria data corresponding to the type of the sample container 110 discriminated by the sample container type discrimination section 303.

Accordingly, as compared with a related art, it is possible to greatly reduce the number of cases in which a slight pressure abnormality that may occur due to a shape or a liquid amount of the sample container 110, which has no influence on sample dispensing, such as a case of contact with the container bottom, is determined as a dispensing abnormality. Accordingly, for example, it is possible to reduce the number of cases in which the dispensing abnormality is determined to occur in a minute amount dispensing or the like compared to the related art. Further, since it is possible to cope with the minute amount dispensing, the dead volume can be reduced while appropriately performing dispensing process monitoring.

The sample container type discrimination section 303 discriminates the type of the sample container 110 based on the information on the sample container 110 input from the user interface or the image information obtained by capturing the image of the sample container 110 to be determined, and therefore a status of the sample container 110 for which the determination criteria data of the pressure abnormality is highly necessary to be changed can be determined with high accuracy, and more appropriate dispensing process monitoring can be implemented.

Further, the sample container type discrimination section 303 discriminates whether the sample container 110 is a container for minute amount or a sample container 110 other than the container for minute amount, and therefore the status of the sample container 110 for which the determination criteria data of the pressure abnormality is highly necessary to be changed can be determined with high accuracy.

### <Embodiment 2>

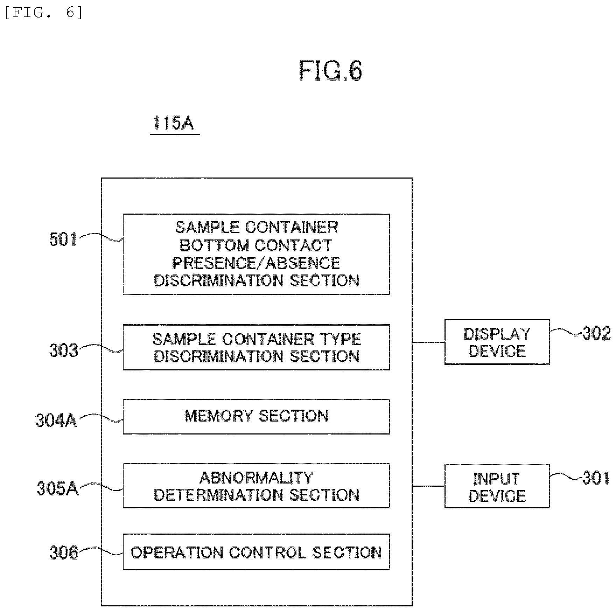

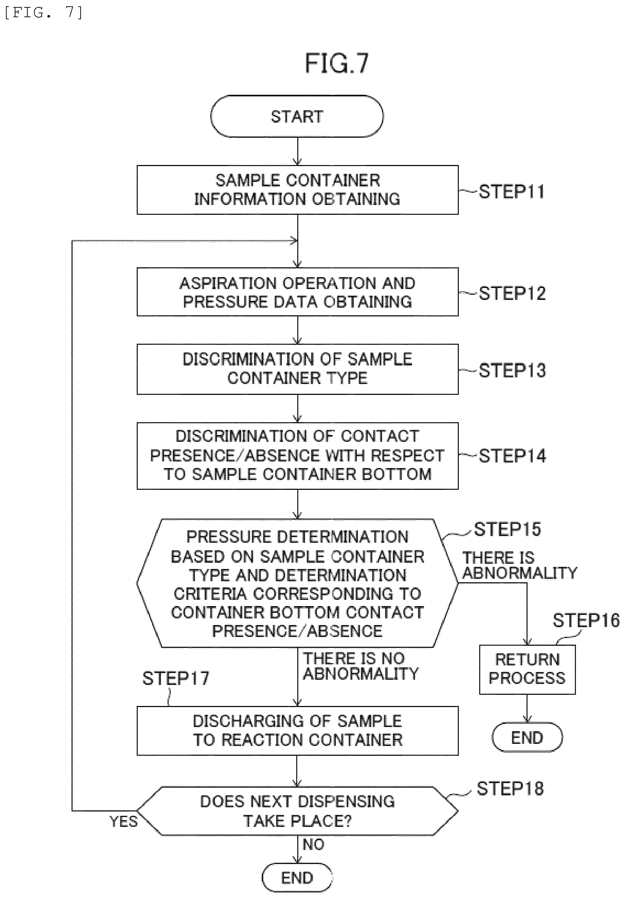

An automatic analyzer and a sample dispensing method according to Embodiment 2 of the invention will be described with reference to FIGS. 6 and 7. FIG. 6 is a functional block diagram showing details of a control section in the automatic analyzer according to the present Embodiment 2, and FIG. 7 is a flowchart of a series of processing of the control section in the present embodiment.

In Embodiment 1, a form is used in which the determination criteria data corresponding to the discriminated sample container type is used to determine whether there is an abnormality in the dispensing of the sample. On the other hand, in the automatic analyzer according to the present Embodiment 2, a form is used in which in addition to Embodiment 1, whether the sample dispensing nozzle 116a comes into contact with a bottom of the sample container 110 is also included in the determination criteria data. That is, a form is used in which the determination criteria data used for the abnormality determination includes a combination of the type of the sample container 110 and presence or absence of contact of the sample dispensing nozzle 116a with the bottom of the sample container 110.

In Embodiment 2, an overall configuration of the automatic analyzer and a sample dispensing mechanism are the same as those in Embodiment 1, and thus illustration and detailed description thereof will be omitted.

A functional block diagram of a control device 115A according to Embodiment 2 shown in FIG. 6 is different from the functional block diagram according to Embodiment 1 shown in FIG. 4 in that a sample container bottom contact presence/absence discrimination section 501 is added to a configuration of FIG. 4.

As described above, the sample container bottom contact presence/absence discrimination section 501 is a mechanism for discriminating whether a tip of the sample dispensing nozzle 116a comes into contact with the bottom of the sample container 110. For example, as shown in FIG. 2, the sample container bottom contact presence/absence discrimination section 501 is a sensor for detecting a brightness of a play portion provided on an upper-end side of the sample dispensing nozzle 116a, and is configured to discriminate the presence or absence of contact based on whether the sample dispensing nozzle 116a rises due to collision and the play portion is dark.

Accordingly, in the present embodiment, a memory section 304A memorizes a plurality of pieces of determination criteria data used for the discrimination by the sample container bottom contact presence/absence discrimination section 501 for each type of the sample container 110.

An abnormality determination section 305A determines whether there is an abnormality in the dispensing of the sample based on a discrimination result of the sample container bottom contact presence/absence discrimination section 501. For example, in addition to Embodiment 1, pressure data can be invalidated after it is determined that the contact is made, or when it is determined that the contact is made, processing of using the determination criteria data for the case of contact can be performed.

Next, the sample dispensing method according to the present embodiment which is preferably executed in the automatic analyzer 1 described above will be described with reference to FIG. 7.

A difference between a flowchart showing a flow of processing in the present embodiment and the flowchart shown in FIG. 5 according to Embodiment 1 is that in FIG. 7, determination of the presence or absence of contact with the bottom of the sample container 110 (step S14) is added, other steps S11, S12, S13, S15, S16, S17, and S18 are the same as steps S1, S2, S3, S4, S5, S6, and S7 shown in FIG. 5, respectively, and detailed description thereof is omitted.

Other configurations and operations are substantially the same as the configurations and operations of the automatic analyzer and the sample dispensing method according to Embodiment 1 described above, and details thereof are omitted.

The automatic analyzer and the sample dispensing method according to Embodiment 2 of the invention also provide substantially the same effects as those of the automatic analyzer and the sample dispensing method according to Embodiment 1 described above.

In addition, the sample container bottom contact presence/absence discrimination section 501 that discriminates whether the tip of the sample dispensing nozzle 116a comes into contact with the bottom of the sample container 110 is further included, the memory section 304A memorizes the plurality of pieces of determination criteria data used for the discrimination of the sample container bottom contact presence/absence discrimination section 501 for each type of the sample container 110, and the abnormality determination section 305A can determine whether there is an abnormality in the dispensing of the sample based on the discrimination result of the sample container bottom contact presence/absence discrimination section 501 to perform the abnormality determination by using the more suitable determination criteria data. A highly reliable determination result can be obtained, and a dead volume amount can be reduced.

### <Embodiment 3>

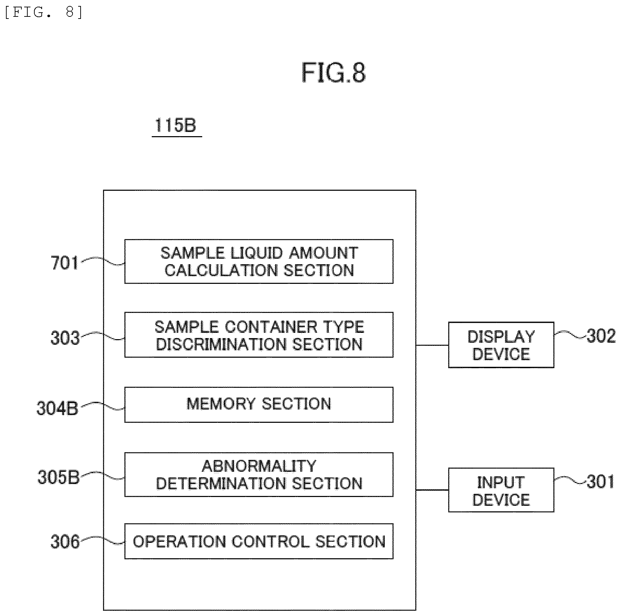

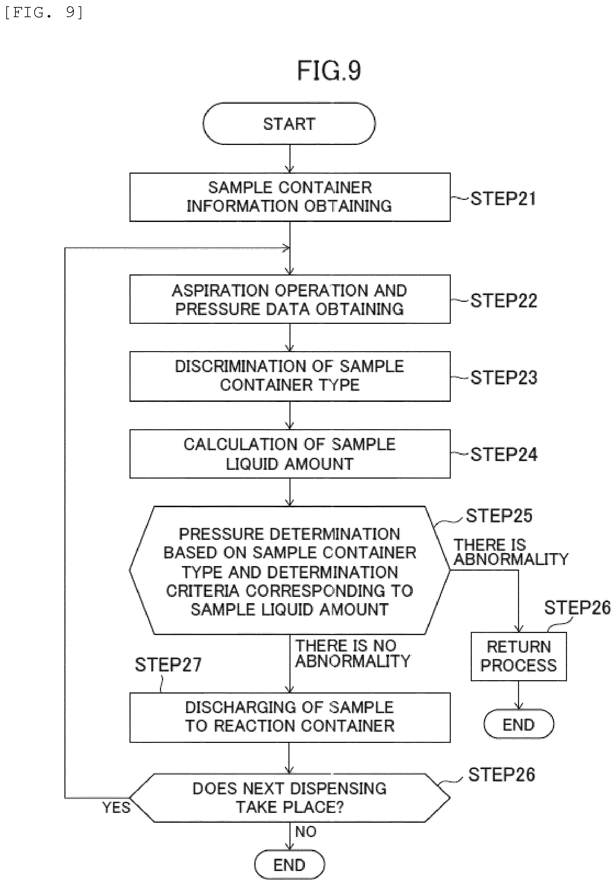

An automatic analyzer and a sample dispensing method according to Embodiment 3 of the invention will be described with reference to FIGS. 8 and 9. FIG. 8 is a functional block diagram showing details of a control section in the automatic analyzer according to the present Embodiment 3, and FIG. 9 is a flowchart of a series of processing of the control section in the present embodiment.

In the automatic analyzer according to the present Embodiment 3, in addition to the configuration in the automatic analyzer according to Embodiment 1, a liquid amount of a sample contained in the sample container 110 is further included in the determination criteria data. That is, a form is used in which the determination criteria data used for abnormality determination includes a combination of the type of the sample container 110 and the liquid amount of the sample contained in the sample container 110.

In Embodiment 3, an overall configuration of the automatic analyzer and a sample dispensing mechanism are the same as those in Embodiment 1, and thus illustration and detailed description thereof will be omitted.

A functional block diagram of a control device 115B according to Embodiment 3 shown in FIG. 8 is different from the functional block diagram according to Embodiment 1 shown in FIG. 4 in that a sample liquid amount calculation section 701 is added to the configuration of FIG. 4.

The sample liquid amount calculation section 701 calculates the liquid amount of the sample by using, for example, a captured image captured by a sample camera that captures an image of the sample container 110 from a side surface side, a liquid surface detection height detected by the capacitance detecting mechanisms 117a and 117b, and information on the type of the sample container 110 discriminated by the sample container type discrimination section 303.

Even when the sample container 110 has the same shape, an amount of the held sample is not always constant. Therefore, it is desirable to obtain information on the liquid amount of the sample contained in the sample container 110 in addition to a shape of the sample container 110 as information on the sample container 110. For example, the information on the sample container 110 can be information indicating that whether a sample amount is regarded as a minute amount.

Accordingly, in the present embodiment, a memory section 304B memorizes a plurality of pieces of determination criteria data used for the determination by the sample liquid amount calculation section 701 for each type of the sample container 110.

An abnormality determination section 305B determines whether there is an abnormality in the dispensing of the sample based on a determination result of the sample liquid amount calculation section 701. For example, processing of using the determination criteria data classified for each liquid amount and container type, processing of estimating a timing at which contact is assumed based on the determined liquid amount and container type and invalidating pressure data after the timing, and the like can be performed.

Next, the sample dispensing method according to the present embodiment which is preferably executed in the above-described automatic analyzer 1 will be described with reference to FIG. 9.

A difference between a flowchart showing a flow of processing in the present embodiment and the flowchart shown in FIG. 5 according to Embodiment 1 is that, in FIG. 9, calculation processing on the sample liquid amount (step S24) is added, other steps S21, S22, S23, S25, S26, S27, and S28 are the same as steps S1, S2, S3, S4, S5, S6, and S7 shown in FIG. 5, respectively, and detailed description thereof is omitted.

Other configurations and operations are substantially the same as the configurations and operations of the automatic analyzer and the sample dispensing method according to Embodiment 1 described above, and details thereof are omitted.

The automatic analyzer and the sample dispensing method according to Embodiment 3 of the invention also provide substantially the same effects as those of the automatic analyzer and the sample dispensing method according to Embodiment 1 described above.

In addition, the sample liquid amount calculation section 701 that calculates the liquid amount of the sample contained in the sample container 110 is further included, the memory section 304B memorizes the plurality of pieces of determination criteria data used for the determination of the sample liquid amount calculation section 701 for each type of the sample container 110, and the abnormality determination section 305B can determine whether there is an abnormality in the dispensing of the sample based on the determination result of the sample liquid amount calculation section 701 to perform the abnormality determination by using the more suitable determination criteria data. A highly reliable determination result can be obtained, and a dead volume amount can be reduced.

### Reference Signs List

1: Automatic analyzer
100: Reaction disk
101: Transfer line
102: Rack rotor
103: Reagent disk
105a: Sample dispensing mechanism
105b: Reagent dispensing mechanism
106: Stirring mechanism
107: Spectrometer
108: Cleaning mechanism
109a, 109b: Nozzle cleaning mechanism
110: Sample container
110a: Test tube
110b: Standard cup
110c: Cup for minute amount
111: Sample rack
112: Reaction container
113: Reagent bottle
115, 115A, 115B: Control device (Control section)
116a: Sample dispensing nozzle
116b: Reagent dispensing nozzle
117a, 117b: Capacitance detecting device (Capacitance detecting section)
202a: Pressure sensor
301: Input device
302: Display device
303: Sample container type discrimination section
304, 304A, 304B: Memory section
305, 305A, 305B: Abnormality determination section
501: Sample container bottom contact presence/absence discrimination section
701: Sample liquid amount calculation section

## Claims

1. An automatic analyzer for analyzing samples, comprising:
a sample dispensing mechanism (105a) having a sample dispensing nozzle (116a) for dispensing the samples from sample containers (110);
a sample container type discrimination section (303) for obtaining information on the sample containers and discriminating the type of the sample containers (110a-c);
a pressure sensor (202a) for detecting pressure in the sample dispensing nozzle;
a memory section (304; 304A) for storing plural determination criteria data for use in determining presence/absence of an abnormality of the sample dispensing mechanism; and
an abnormality determination section (305; 305A; 305B) for determining, based on detection results of the pressure sensor when dispensing the samples by the sample dispensing mechanism and the determination criteria data, whether or not an abnormality takes place in dispensing the samples;
**characterized in that**
the plural determination criteria data stored in the memory section are determination criteria specific for each type of the sample containers; and
the abnormality determination section is adapted to determine, whether or not an abnormality takes place in dispensing the samples, based on the detection results of the pressure sensor and the specific determination criteria data for the type of the sample containers which is discriminated in the sample container type discrimination section.

2. The automatic analyzer according to claim 1, wherein
the automatic analyzer further comprises a sample container bottom contact presence/absence discrimination section (501) for discriminating whether or not a tip end of the sample dispensing nozzle (116a) contacts bottoms of the sample containers (110),
the memory section (304A) is adapted to store plural determination criteria data for use in determination by the sample container bottom contact presence/absence discrimination section, for each type of the sample containers, and
the abnormality determination section (305A) is adapted to determine, based on discrimination results of the sample container bottom contact presence/absence discrimination section, whether or not an abnormality take places in dispensing the samples.

3. The automatic analyzer according to claim 1, wherein
the automatic analyzer further comprises a sample liquid amount calculation section (701) for calculating liquid amounts of the samples stored in the sample containers (110),
the memory section (304B) is adapted to store plural determination criteria data for use in determination by the sample liquid amount calculation section, for each type of the sample containers (110a-c), and
the abnormality determination section (305B) is adapted to determine, based on determination results of the sample liquid amount calculation section, whether or not an abnormality takes place in dispensing the samples.

4. The automatic analyzer according to claim 1, wherein the sample container type discrimination section (303) is adapted to perform discrimination of the type of the sample containers (110a-c), based on information of the sample containers (110) to be input from a user interface.

5. The automatic analyzer according to claim 1, wherein the sample container type discrimination section (303) is adapted to perform discrimination of the type of the sample containers (110a-c), based on photographed image information of the sample containers (110) to be determined.

6. The automatic analyzer according to claim 1, wherein the sample container type discrimination section (303) is adapted to discriminate whether the sample containers (110) are sample containers for minute amount (110c) or other than those.

7. A dispensing method for samples by an automatic analyzer comprising a sample dispensing mechanism (105a) having a sample dispensing nozzle (116a) dispensing samples from sample containers (110), a pressure sensor (202a) detecting pressure in the sample dispensing nozzle, and a memory section (304; 304A) for storing plural determination criteria data for use in determining presence/absence of an abnormality of the sample dispensing mechanism specific for each type of the sample containers, the dispensing method comprising:
obtaining (STEP1, STEP11, STEP21) information on the sample containers;
dispensing (STEP2, STEP12, STEP22) the samples to be dispensed by the sample dispensing mechanism;
discriminating (STEP3, STEP13, STEP23) the type of the sample containers based on the obtained information on the sample containers; and
determining (STEP4, STEP15, STEP25), based on detection results from the pressure sensor in the dispensing step and the determination criteria data stored in the memory section for the obtained and discriminated type of the sample containers (110a-c), whether or not an abnormality takes place in dispensing the samples in the dispensing step.

## Patentansprüche

1. Automatische Analysevorrichtung zum Analysieren von Proben, umfassend:
einen Probenausgabemechanismus (105a) mit einer Probenausgabedüse (116a) zur Ausgabe der Proben aus Probenbehältern (110);
einen Probenbehältertyp-Unterscheidungsbereich (303) zum Erhalten von Informationen über die Probenbehälter und zum Unterscheiden des Typs der Probenbehälter (110a-c);
einen Drucksensor (202a) zum Erfassen von Druck in der Probenausgabedüse;
einen Speicherbereich (304; 304A) zum Speichern mehrerer Bestimmungskriteriumsdaten zur Verwendung bei der Bestimmung des Vorhandenseins/Nichtvorhandenseins einer Anomalie des Probenausgabemechanismus; und
einen Anomalie-Bestimmungsbereich (305; 305A; 305B) zum Bestimmen, basierend auf Erfassungsergebnissen des Drucksensors beim Ausgeben der Proben durch den Probenausgabemechanismus und den Bestimmungskriteriumsdaten, ob eine Anomalie beim Ausgeben der Proben auftritt oder nicht;
**gekennzeichnet dadurch, dass**
die mehreren im Speicherbereich gespeicherten Bestimmungskriteriumsdaten Bestimmungskriterien spezifisch für jeden Typ der Probenbehälter sind; und
der Anomalie-Bestimmungsbereich dazu ausgelegt ist, zu bestimmen, ob eine Anomalie beim Ausgeben der Proben auftritt oder nicht, basierend auf den Erfassungsergebnissen des Drucksensors und den spezifischen Bestimmungskriteriumsdaten für den Typ der Probenbehälter, der im Probenbehältertyp-Unterscheidungsbereich unterschieden wird.

2. Automatische Analysevorrichtung nach Anspruch 1, wobei
die automatische Analysevorrichtung ferner einen Probenbehälterbodenkontakt-Vorliegen/Nichtvorliegen-Unterscheidungsbereich (501) zum Unterscheiden, ob ein Spitzenende der Probenausgabedüse (116a) Böden der Probenbehälter (110) kontaktiert oder nicht, umfasst,
der Speicherbereich (304A) dazu ausgelegt ist, mehrere Bestimmungskriteriumsdaten zur Verwendung bei der Bestimmung durch den Probenbehälterbodenkontakt-Vorliegen/Nichtvorliegen-Unterscheidungsbereich für jeden Typ der Probenbehälter zu speichern, und
der Anomalie-Bestimmungsbereich (305A) dazu ausgelegt ist, basierend auf Unterscheidungsergebnissen des Probenbehälterbodenkontakt-Vorliegen/Nichtvorliegen-Unterscheidungsbereichs zu bestimmen, ob eine Anomalie beim Ausgeben der Proben auftritt oder nicht.

3. Automatische Analysevorrichtung nach Anspruch 1, wobei
die automatische Analysevorrichtung ferner einen Probenflüssigkeitsmengen-Berechnungsbereich (701) zum Berechnen von Flüssigkeitsmengen der in den Probenbehältern (110) gespeicherten Proben umfasst,
der Speicherbereich (304B) dazu ausgelegt ist, mehrere Bestimmungskriteriumsdaten zur Verwendung bei der Bestimmung durch den Probenflüssigkeitsmengen-Berechnungsbereich für jeden Typ der Probenbehälter (110a-c) zu speichern, und
der Anomalie-Bestimmungsbereich (305B) dazu ausgelegt ist, basierend auf Bestimmungsergebnissen des Probenflüssigkeitsmengen-Berechnungsbereichs zu bestimmen, ob eine Anomalie beim Ausgeben der Proben auftritt oder nicht.

4. Automatische Analysevorrichtung nach Anspruch 1, wobei der Probenbehältertyp-Unterscheidungsbereich (303) dazu ausgelegt ist, die Unterscheidung des Typs der Probenbehälter (110a-c) basierend auf Informationen der Probenbehälter (110) durchzuführen, die von einer Benutzerschnittstelle einzugeben sind.

5. Automatische Analysevorrichtung nach Anspruch 1, wobei der Probenbehältertyp-Unterscheidungsbereich (303) dazu ausgelegt ist, die Unterscheidung des Typs der Probenbehälter (110a-c) basierend auf fotografierten Bildinformationen der zu bestimmenden Probenbehälter (110) durchzuführen.

6. Automatische Analysevorrichtung nach Anspruch 1, wobei der Probenbehältertyp-Unterscheidungsbereich (303) dazu ausgelegt ist, zu unterscheiden, ob die Probenbehälter (110) Probenbehälter für geringe Mengen (110c) oder andere als diese sind.

7. Ausgabeverfahren für Proben durch eine automatische Analysevorrichtung, die einen Probenausgabemechanismus (105a) mit einer Probenausgabedüse (116a), die Proben aus Probenbehältern (110) ausgibt, einen Drucksensor (202a), der Druck in der Probenausgabedüse erfasst, und einen Speicherbereich (304; 304A) zum Speichern mehrerer Bestimmungskriteriumsdaten zur Verwendung bei der Bestimmung der Anwesenheit/Abwesenheit einer Anomalie des Probenausgabemechanismus spezifisch für jeden Typ der Probenbehälter umfasst, wobei das Ausgabeverfahren umfasst:
Erhalten (SCHRITT1, SCHRITT11, SCHRITT21) von Informationen über die Probenbehälter;
Ausgeben (SCHRITT2, SCHRITT12, SCHRITT22) der auszugebenden Proben durch den Probenausgabemechanismus;
Unterscheiden (SCHRITT3, SCHRITT13, SCHRITT23) des Typs der Probenbehälter basierend auf den erhaltenen Informationen über die Probenbehälter; und
Bestimmen (SCHRITT4, SCHRITT15, SCHRITT25), basierend auf Erfassungsergebnissen des Drucksensors im Ausgabeschritt und den im Speicherbereich für den erhaltenen und unterschiedenen Typ der Probenbehälter (110a-c) gespeicherten Bestimmungskriteriumsdaten, ob eine Anomalie beim Ausgeben der Proben im Ausgabeschritt auftritt oder nicht.

## Revendications

1. Analyseur automatique pour analyser des échantillons, comprenant :
un mécanisme (105a) de distribution d'échantillons ayant un embout (116a) de distribution d'échantillons pour distribuer les échantillons depuis des récipients (110) pour échantillons ;
une section (303) de différentiation de types de récipients pour échantillons pour obtenir des informations sur les récipients pour échantillons et différencier le type des récipients (110a-c) pour échantillons ;
un capteur (202a) de pression pour détecter une pression dans l'embout de distribution d'échantillons ;
une section (304 ; 304A) de mémoire pour stocker des données de critères multiples de détermination pour une utilisation dans la détermination de la présence/absence d'une anomalie du mécanisme de distribution d'échantillons ; et
une section (305 ; 305A ; 305B) de détermination d'anomalie pour déterminer, sur la base de résultats de détection du capteur de pression lors de la distribution des échantillons par le mécanisme de distribution d'échantillons et des données de critères de détermination, si une anomalie est ou non présente dans la distribution des échantillons ;
**caractérisé en ce que**
les données de critères multiples de détermination stockées dans la section de mémoire sont des critères de détermination spécifiques pour chaque type des récipients pour échantillons ; et
la section de détermination d'anomalie est adaptée à déterminer, si une anomalie est ou non présente dans la distribution des échantillons, sur la base des résultats de détection du capteur de pression lors de la distribution des échantillons par le mécanisme de distribution d'échantillons et des données de critères spécifiques de détermination pour le type des récipients pour échantillons qui est différencié dans la section de différentiation de types de récipients pour échantillons.

2. Analyseur automatique selon la revendication 1, dans lequel
l'analyseur automatique comprend en outre une section (501) de différentiation de présence/absence de contact de fonds de récipients pour échantillons pour différentier si une extrémité de pointe de l'embout (116a) de distribution d'échantillons contacte des fonds des récipients (110) pour échantillons,
la section (304A) de mémoire est adaptée à stocker des données de critères multiples de détermination pour une utilisation dans la détermination par la section de différentiation de présence/absence de contact de fonds de récipients pour échantillons, pour chaque type des récipients pour échantillons, et
la section (305A) de détermination d'anomalie est adaptée à déterminer, sur la base de résultats de différentiation de la section de différentiation de présence/absence de contact de fonds de récipients pour échantillons, si une anomalie est ou non présente dans la distribution des échantillons.

3. Analyseur automatique selon la revendication 1, dans lequel
l'analyseur automatique comprend en outre une section (701) de calcul de quantités de liquide d'échantillons pour calculer des quantités de liquide des échantillons stockés dans les récipients (110) pour échantillons,
la section (304B) de mémoire est adaptée à stocker des données de critères multiples de détermination pour une utilisation dans la détermination par la section de calcul de quantités de liquide d'échantillons, pour chaque type des récipients (110a-c) pour échantillons, et
la section (305B) de détection d'anomalie est adaptée à déterminer, sur la base de résultats de détermination de la section de calcul de quantités de liquide d'échantillons si une anomalie est ou non présente dans la distribution des échantillons.

4. Analyseur automatique selon la revendication 1, dans lequel la section (303) de différentiation de types de récipients pour échantillons est adaptée à effectuer une différentiation du type des récipients (110a-c) pour échantillons, sur la base d'informations des récipients (110) pour échantillons devant être saisies depuis une interface utilisateur.

5. Analyseur automatique selon la revendication 1, dans lequel la section (303) de différentiation de types de récipients pour échantillons est adaptée à effectuer une différentiation du type des récipients (110a-c) pour échantillons, sur la base d'informations d'images photographiées des récipients (110) pour échantillons devant être déterminés.

6. Analyseur automatique selon la revendication 1, dans lequel la section (303) de différentiation de types de récipients pour échantillons est adaptée à différentier si les récipients (110) pour échantillons sont des récipients (110c) pour échantillons pour une quantité minuscule ou autres que ceux-ci.

7. Procédé de distribution pour des échantillons par un analyseur automatique comprenant un mécanisme (105a) de distribution d'échantillons ayant un embout (116a) de distribution d'échantillons distribuant des échantillons depuis des récipients (110) pour échantillons, un capteur (202a) de pression détectant une pression dans l'embout de distribution d'échantillons, et une section (304 ; 304A) de mémoire pour stocker des données de critères multiples de détermination pour une utilisation dans la détermination de la présence/absence d'une anomalie du mécanisme de distribution d'échantillons spécifiques pour chaque type des récipients pour échantillons, le procédé de distribution comprenant :
l'obtention (ÉTAPE 1, ÉTAPE 11, ÉTAPE 21) d'informations sur les récipients pour échantillons ;
la distribution (ÉTAPE 2, ÉTAPE 12, ÉTAPE 22) des échantillons devant être distribués par le mécanisme de distribution d'échantillons ;
la différentiation (ÉTAPE 3, ÉTAPE 13, ÉTAPE 23) du type des récipients pour échantillons sur la base des informations obtenues sur les récipients pour échantillons ; et
la détermination (ÉTAPE 4, ÉTAPE 15, ÉTAPE 25), sur la base de résultats de détection provenant du capteur de pression à l'étape de distribution et des données de critères de détermination stockées dans la section de mémoire pour le type obtenu et différentié des récipients (110a-c) pour échantillons, si une anomalie est ou non présente dans la distribution des échantillons à l'étape de distribution.
